(19) Europäisches Patentamt
European Patent Office
Office européen des brevets

(11) **EP 3 301 533 B1**

(12) **EUROPEAN PATENT SPECIFICATION**

(45) Date of publication and mention of the grant of the patent:
**10.07.2019 Bulletin 2019/28**

(51) Int Cl.:
***G05D 11/13*** *(2006.01)*

(21) Application number: **17193473.0**

(22) Date of filing: **20.04.2007**

(54) **METHOD FOR CONTINUOUS IN-LINE BLENDING OF BUTANE AND PETROLEUM**

VERFAHREN ZUM KONTINUIERLICHEN IN-LINE-BLENDING VON BUTAN UND ERDÖL

MÉTHODE POUR MÉLANGE EN LIGNE CONTINU DE BUTANE ET DE PÉTROLE

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **20.04.2006 US 407523**

(43) Date of publication of application:
**04.04.2018 Bulletin 2018/14**

(62) Document number(s) of the earlier application(s) in accordance with Art. 76 EPC:
**07794356.1 / 2 010 982**

(73) Proprietor: **Texon LP**
**Houston, TX 77079 (US)**

(72) Inventors:
• **MATTINGLY, Larry, D.**
**Sanford, Florida 32771 (US)**
• **VANDERBUR, Steven, M.**
**Houston, Texas 77077 (US)**

(74) Representative: **Leißler-Gerstl, Gabriele**
**Hoefer & Partner**
**Patentanwälte mbB**
**Pilgersheimer Strasse 20**
**81543 München (DE)**

(56) References cited:
**US-A- 3 342 199      US-A- 3 751 644**
**US-A- 6 161 060      US-B1- 6 679 302**

## Description

## FIELD OF THE INVENTION

The present invention relates to versatile in-line processes for blending butane into a gasoline stream that allow butane to be blended into a gasoline stream at any point along a petroleum pipeline.

## BACKGROUND OF THE INVENTION

Petroleum pipelines are the backbone of this nation's gasoline distribution system, delivering refined fuel products from ports and refineries to storage facilities around the country. Through an intricate network of coordinated deliveries from multiple sources, batches of varying grades and types of fuel travel through these pipelines to predetermined locations. Tank farms are used to store fuel delivered through these pipelines, and to distribute the fuel to other tank farms and ultimately to tanker trucks that deliver the fuel to end use outlets such as retail gasoline stations. Tank farms that simply store the gasoline for further distribution to other tank farms are referred to herein as "intermediate tank farms." Tank farms that dispense the gasoline to tanker trucks for delivery to the end user are referred to herein as "terminal tank farms." Petroleum products are typically dispensed to tanker trucks in what is known as a rack, which usually comprise several outlet ports to which different gasoline transports may be coupled. Some tank farms are used for terminal and intermediate functions, and those farms are referred to herein as "combined use tank farms."

A significant physical property of gasoline is its volatility, or its ability to combust. In order to keep cars performing at a consistent level year-round, gasoline marketers blend agents such as butane with gasoline to increase the Reid vapor pressure and volatility of the gasoline, especially during the colder months. These marketers also add butane to reduce the cost of the gasoline. This blending can occur in-line, so that butane is added directly to a line that is transporting the gasoline. Alternatively, blending can occur in batches, as when butane is added to a storage tank.

Because gasoline vapor emissions from automobiles are a major component of volatile organic compounds (VOC's) in the atmosphere, governments in various countries have regulations that govern the volatility of gasoline and the quantity of butane that can be blended with gasoline. For example, the United States Environmental Protection Agency (EPA) and numerous state agencies have promulgated regulations that set maximum volatility levels from May 1 through September 15, when the gasoline is warmest and most volatile, and require that any blended gasoline be certified for compliance with the volatility guidelines. See 40 C.F.R. § 80.27 (2005): The regulations also establish maximum volatility levels for gasoline based on the season of the year, and the region in which the gasoline will be dispensed and sold.

There are two principal methods for assessing the volatility of gasoline: (1) measuring the vapor to liquid ratio, and (2) measuring the vapor pressure. The Reid method is the standard test for measuring the vapor pressure of petroleum products. Reid vapor pressure (RVP) is related to true vapor pressure, but is a more accurate assessment for petroleum products because it considers sample vaporization as well as the presence of water vapor and air in the measuring chamber.

Regulatory authorities in various countries are also concerned; with the sulfur contained in butane, and its emission into the atmosphere when blended gasoline is combusted, and have promulgated regulations that specify how much sulfur is allowed in butane that is added to gasoline, and the testing requirements for assuring that the amounts of sulfur do not exceed the specified amounts. Exemplary regulations of the United States EPA are found at 40 C.F.R. §§ 80.195, 80.340(a)(1) (2005). Under these regulations, the sulfur content of the butane cannot exceed 30 ppm, and the butane must be sampled at least once every 1892705.9 litres (500,000 gallons) of butane to assure compliance. See 40 C.F.R. § 80.340(a)(1)-(2) (2005).

Regulatory authorities are also concerned with the type of gasoline into which butane is blended, especially reformulated gasoline (RFG) stock and blendstock that is prepared for subsequent oxygenate blending (BOB). For example, U.S. EPA rules governing such blending are contained at 40 C.F.R. part 80. In general, these regulations impose distillation temperature limitations on the blended gasoline, and require sampling and testing of the gasoline before and after the blending of butane into the gasoline, to ensure that the integrity of the RFG program will not be compromised where butane is included in a blender's annual average compliance calculations for RFG or RBOB.

Butane is often blended with other gasoline components at the refinery, where it is typically added at the trunk line in response to changes in vapor pressure demand. An exemplary refinery blending process is disclosed in Mayer, U.S. Pat. No. 3,751,644. This patent, which is owned by Sun Oil Company, describes a system for automatically adjusting the amount of butane added to a gasoline stream at a petroleum refinery, based on continuous measurements of the Reid vapor pressure of the gasoline downstream from the point of blending. The described process calculates the amount of butane to be blended based on measurements taken downstream of the blending operation, and does not include measuring the Reid vapor pressure upstream of the blending operation, or calculating the blend ratio based on the Reid vapor pressure upstream from the blending operation.

Bajek's U.S: Pat. No. 3,999,959, which is owned by Universal Oil Products Company, also discloses a system for blending butane and gasoline at a petroleum refinery. The Bajek system blends butane with a low-octane gasoline stream and a high-octane gasoline stream, and then analyzes the blended gasoline to measure characteristics such as Reid vapor pressure and vapor to liquid ratio. Bajek does not disclose monitoring the gasoline upstream of the blending operation, or calculating the blend ratio based upon such upstream monitoring.

Efforts at blending butane at a terminal tank farm have also recently been undertaken. As described in our granted patent U.S. 6,679,302 butane can be blended in-line with a gasoline stream immediately before the gasoline is dispensed to a tanker truck, and after it has been withdrawn from a storage tank. In a preferred process described in this patent, the Reid vapor pressure is measured upstream of the blending operation, and the blend ratio is calculated based on the upstream measurement.

Lastly, the inventors are aware of an unpatented system that is used to blend butane and gasoline at several terminal tank farms. These systems continuously monitor the Reid vapor pressure of gasoline that is introduced to a storage tank, and blend butane with the gasoline based upon the vapor pressure measurements. The butane is supplied by a tanker truck, as opposed to a permanent on-site mounted butane bullet. These unpatented systems do not automatically vary the blending process based upon the time of year, petroleum destination, or type of gasoline, but instead require manual oversight and control of the process. These unpatented systems also do not continuously monitor the Reid vapor pressure downstream of the blending operation as an integrity check. Instead, they certify the integrity of the blending operation by periodically measuring the Reid vapor pressure of the entire storage tank.

Several methods have been attempted to improve the precision of butane blending and the predictability of Reid vapor pressure in the final product. The Grabner unit is a substantial advance in this respect. The Grabner unit (manufactured by Grabner Instruments) is a measuring device capable of providing Reid vapor pressure and vapor to liquid ratio data for a gasoline sample typically within 6-11 minutes of introducing the sample to the unit. It has been employed at some refineries to consistently measure the volatility of gasoline, and to blend butane with the gasoline based upon an allowable Reid vapor pressure for the gasoline.

## SUMMARY OF THE INVENTION

One of the greatest hurdles to in-line blending of butane into pipelines that transmit consolidated batches of petroleum, which include multiple batches and types of petroleum from numerous points of origin, has been the variability of the gasoline stream in terms of gasoline type, batch size, batch timing, flow rate, vapor pressure, restrictions on blending based on time of year and destination, among others. By merging batch and flow data maintained by the pipeline operator into the blending operation, and monitoring vapor pressure both upstream and downstream of a butane blending operation, the inventors have developed a tightly controlled butane blending system with surprising versatility that can be used to blend butane with petroleum products along pipelines that transmit these consolidated batches, or any other point along a petroleum pipeline, regardless of variations in the flow rate or type of gasoline in the pipeline, the time of year in which the gasoline is delivered, or the ultimate destination to which the gasoline is delivered. For the first time, petroleum vendors and distributors are able to take optimum advantage of the many cost saving and performance benefits that butane blending offers, and to do so without regard to the location where the blending occurs along the pipeline.

Therefore, in one embodiment the invention provides a method as defined in the claims for in-line blending of butane into a consolidated gasoline stream of multiple batches and gasoline types, comprising: (a) providing a continuously flowing gasoline stream that comprises: (i) a plurality of batches of different types of gasoline; (ii) a gasoline flow rate that varies over time; and (iii) a plurality of gasoline vapor pressures; (b) providing an allowable vapor pressure; (c) providing a butane stream that comprises a butane vapor pressure; (d) periodically determining said gasoline vapor pressure; (e) periodically determining said gasoline flow rate; (f) calculating a blend ratio based upon said butane vapor pressure, said gasoline vapor pressure, and said allowable vapor pressure; and (g) blending said butane stream and said gasoline stream at a blending unit at said blend ratio to provide a blended gasoline stream having a blended vapor pressure less .than or equal to said allowable vapor pressure , and wherein the vapor pressure of the gasoline is determined downstream of the blending unit.

In a preferred embodiment, the blending process is validated in a step that measures the vapor pressure of the blended gasoline immediately downstream of the blending operation. The vapor pressure of the gasoline is typically measured by withdrawing a sample of the gasoline from the gasoline stream, measuring the vapor pressure in an in-line vapor pressure monitoring unit, and returning the sample to the gasoline stream. The vapor pressure can be measured as Reid vapor pressure, as vapor to liquid ratio, or a combination of both.

It is also possible to determine the flow rate of the gasoline stream periodically, and to calculate a butane blend rate based upon the gasoline flow rate. The gasoline flow rate and gasoline vapor pressure can be periodically re-determined at about the same frequency, and the blend ratio and blend rate recalculated to account for flow rate differences and vapor pressure differences within and among batches in gasoline.

The calculation of blend ratio and blend rate is preferably performed by a first information processing unit maintained by the butane blender, but which accesses data supplied by the pipeline operator on a second information processing unit. For example, the pipeline operator may generate flow rate pulses from a flow meter, and that information may be accessed by the first IPU for use in calculating the blend rate. Similarly, the pipeline operator will typically have access to batch data that includes the type of gasoline in any particular batch, in the form of batch codes assigned by the pipeline operator or user of the pipeline. Because butane blending is not permitted for some types of gasoline, including diesel, transmix or jet fuel, information concerning gasoline type, when accessed by the butane blending IPU, can be used to calculate a blending rate and ratio that are zero when an impermissible batch, passes the butane blending device, or that simply closes the valves that supply butane to the gasoline stream.

The blend ratio and blend rate calculations can be based upon the time of year in which the blending occurs, and/or the delivery location for the blended gasoline. The blending operation further can comprise an information processing unit on which are stored multiple allowable vapor, pressures based on the date and/or destination of the gasoline, in addition to date ranges during which blending is not permitted, typically based on geographic destination. In practice, the information processing unit determines the allowable vapor pressure from the date and/or destination of the gasoline stream, and calculates the blend ratio and/or blend rate from the allowable vapor pressure. If blending is not permitted based on the time of year or the geographic destination of a batch, the rate or ratio may be calculated as zero, or the valves can otherwise be closed to prevent blending.

Also disclosed herein is a combination monitoring system for monitoring sulfur in the butane stream at the same time that the vapor pressure of the gasoline stream is measured. A sulfur sampling unit preferably removes samples of butane from the butane supply line preferably at least once every 1892705.9 litres (500,000 gallons), and the sulfur content of the samples is determined either off-line in a laboratory, or in-line using an automated sulfur monitor that allows the butane is returned to the butane supply line after testing. The monitoring thereby ensures that the supply of butane does not exceed specified limitations for sulfur in butane that is blended into gasoline.

The methods and systems of the present invention can be specially adapted for blending butane into gasoline that is formulated for blending with ethanol (i.e. "blendstock for oxygen blending," or "BOB" gasoline). When blending with BOB, the distillation temperature ($T_D$) for the blended gasoline often cannot fall below a prescribed value, and the blend ratio and blend rate are calculated based on the vapor pressure and distillation temperature of the gasoline stream, to assure that (1) the vapor pressure of the blended gasoline does not rise above allowable vapor pressure, and (2) the $T_D$ of the blended gasoline does not fall below the prescribed value. $T_D$ is typically measured in-line from the same sample stream that is used to measure vapor pressure, and the sample stream is typically returned to the pipeline after the sampling is complete. $T_D$ refers to the temperature at which a given percentage of gasoline, volatilizes under atmospheric conditions, and is typically measured in a distillation unit. For example, the gasoline can be tested for T(50), which represents the temperature at which 50% of the gasoline volatilizes, or it can be measured at T(10), T(90), or some other temperature value. In a preferred embodiment, the $T_D$ of the blended gasoline stream is measured upstream and downstream of the blending unit.

Additional advantages of the invention will be set forth in part in the description which follows, and in part will be obvious from the description, or may be learned by practice of the invention. The advantages of the invention will be realized and attained by means of the elements and combinations particularly pointed out in the appended claims. It is to be understood that both the foregoing general description and the following detailed description are exemplary and explanatory only and are not restrictive of the invention, as claimed.

## BRIEF DESCRIPTION OF THE DRAWINGS

FIG. 1 is a functional block diagram illustrating the architecture of an exemplary butane blending system.
FIG. 2 is a logic flow diagram illustrating an overview of an exemplary butane and gasoline blending method.
FIG. 3 is a logic flow diagram illustrating an overview of an analysis of the gasoline or blended gasoline streams.
FIG. 4 is a logic flow diagram illustrating operations of the two valves that control the flow of butane and gasoline into the blending unit.
FIG. 5 is a logic flow diagram illustrating an exemplary process for determining the blend ratio of butane and gasoline, monitoring the blended gasoline, and adjusting the blend ratio if necessary.

## DETAILED DESCRIPTION OF THE INVENTION

### Definitions and Methods of Measurement

Throughout this patent application, whenever an analysis of gasoline or butane is disclosed, the analysis is to be performed in accordance with applicable EPA regulations and American Society for Testing and Materials ("ASTM") methods in force as of the date of this application Therefore, the following ASTM methods are to be used when applicable:

1. When vapor pressure is measured according to the present invention, it will be understood that any suitable measure of vapor pressure could be taken, including Reid vapor pressure and/or vapor/liquid ratio. For measuring the Reid vapor pressure of reformulated gasoline, ASTM standard method D 5191-01, entitled "Standard Test Method for Vapor Pressure of Petroleum Products (Mini Method)" must be used. The following correlation must also be used to satisfy EPA regulations:

$$RVP_{EPA} = (.956 * RVP_{ASTM}) - 2.39 \text{ kPa}$$

2. For measuring the sulfur content of butane blended with reformulated gasoline, ASTM standard method D 6667 entitled "Standard Test Method for Sulfur in Petroleum Gas by Oxidative Microcoulometry" should be used. When blending with conventional gasoline, EPA regulations permit any ASTM sulfur test method to be used for quality assurance testing, so long as the test results are correlated with method D 3246-96.

3. For measuring the temperature at which a given percentage of gasoline is volatilized, ASTM standard D 86-01, should be used. This method measures the percentage of a gasoline sample that evaporates, as a function of temperature, as the sample is heated up under controlled conditions. $T_D$ refers to the temperature at which a given percentage of gasoline volatilizes using ASTM standard D 86-01 as the test method, T(50) refers to the temperature at which 50% of gasoline volatilizes using ASTM standard D 86-01 as the test method, etc.

The term gasoline, when used herein, refers to any refined petroleum product that flows through a petroleum pipeline. The term thus includes all grades of conventional gasoline, reformulated gasoline ("RFG"), diesel fuel, jet fuel, and transmix. The term also includes blendstock for oxygenate blending ("BOB"), which is typically used for blending with ethanol.. BOBs include RBOB (reformulated gasoline blendstock), PBOB (premium gasoline blendstock), CBOB (conventional gasoline blendstock), and any other blendstock used for oxygenate or ethanol blending. When a gasoline stream is identified herein as comprising a plurality of batches of multiple gasoline types, each batch will be understood to include only one type of gasoline. It will also be understood that the plurality of batches .. originate from multiple locations, and that they have been consolidated into one gasoline stream from trunk lines servicing the various origination points.

A continuous flow of gasoline should be contrasted with a flow of gasoline in a rack blending operation, which occurs in segments (i.e. start and stop periods), and in increments (i.e. where the flow rate depends on the capacity of a single pumping system, and is proportionate to the number of tankers being filled by a single pump at any one time.) It will be understood that a continuous flow can be interrupted for brief periods of time, for maintenance and other pipeline related activities.

An in-line monitoring system refers to any system in which a sample is withdrawn from a fuel stream, monitored, and thereafter returned to the fuel stream.

**Discussion**

The present description discloses a number of examples, each of which are described in greater detail below. Unless otherwise specified, each of the following examples can be implemented at any point along a petroleum pipeline - i.e. at the rack, along a consolidated pipeline that transmits multiple types of gasoline, along a pipeline that transmits only one type of gasoline (as in a line that transmits only one type of gasoline to an in ground storage tank). The tank farm at which butane is blended may be a terminal gasoline tank farm, an intermediate gasoline tank farm, or a combined use tank farm. In one embodiment, the systems and methods further include transmitting the blended gasoline stream to an in-ground storage tank (i.e. a tank that is permanently constructed on a piece of land, typically with berms around its periphery to contain any petroleum spills).

In addition, it will be understood that the invention can be practiced with any type of gasoline with which butane can permissibly be blended, including conventional gasoline, reformulated gasoline, and BOB. The description discloses both methods of blending and the system components for blending, and it will be understood that each method has a corresponding system, and that each system has a corresponding method.

In a first principal embodiment, the invention provides a method for blending along a consolidated pipeline that transmits multiple batches of petroleum of varying gasoline types. The method employs in-line, vapor pressure sensors that monitor the vapor pressure of the gasoline stream, and one or more information processing units that calculate blending rates and ratios based upon the vapor pressure of the gasoline, the vapor pressure of the butane, and an allowable vapor pressure for the gasoline, control blending at the calculated rates and ratios, and periodically re-sample the gasoline stream and recalculates the blend rate and ratio based upon revised vapor pressures. Therefore, in a first principal embodiment the invention provides a method for in-line blending of gasoline and butane comprising: (a) providing a continuously flowing gasoline stream that comprises: (i) a plurality of batches of different gasoline types; (ii) a gasoline flow rate that varies over time; and (iii) a plurality of gasoline vapor pressures; (b) providing an allowable vapor pressure; (c) providing a butane stream that comprises a butane vapor pressure; (d) periodically determining said gasoline vapor pressure; (e) periodically determining said gasoline flow rate; (f) calculating a blend ratio based upon said butane vapor pressure, said gasoline vapor pressure, and said allowable vapor pressure; and (g) blending said butane stream and said gasoline stream at a blending unit at said blend ratio to provide a blended gasoline stream having a blended vapor pressure less than or equal to said allowable vapor pressure, and (h) determining the vapor pressure of the gasoline downstream of the blending unit. The vapor pressure is preferably measured as Reid vapor pressure, vapor/liquid ratio, or both.

As used throughout this application, the term "flow rate" refers to a volume of a fluid that flows past a given point over a given period of time. The gasoline stream typically has a gasoline flow rate that varies within a batch of gasoline, and therefore, utilization of the invention typically comprises periodically determining the gasoline flow rate through the pipeline, and periodically recalculating the butane blend rate based upon the gasoline flow rate and a calculated blend ratio. The flow rate may be derived from a flow meter installed on the pipeline that is dedicated to the blending operation, but is preferably received .from the pipeline operator, by accessing pulses generated by the operator's flow meter.

The methods and systems of the present description can employ data and programming that takes into account regulatory limits on vapor pressure based on the time of year and geographical region, and automatically vary the blend rate or ratio for a consolidated gasoline stream based on those limits. Once again, this applies to consolidated gasoline streams that transmit multiple batches of differing types of gasoline. Therefore, the description discloses a system for in-line blending of gasoline and butane comprising (a) a continuously flowing gasoline stream that comprises: (i) a plurality of batches of different gasoline types; (ii) a gasoline flow rate that varies over time; and (iii) a plurality of gasoline vapor pressures; (b) a butane stream; (c) a blending unit for blending said gasoline stream and said butane stream at an actual blend ratio and an actual blend rate to yield a blended gasoline stream; (d) an upstream vapor pressure sensor in sensory communication with said gasoline stream upstream of said blending unit; (e) one or more informational databases on which is stored seasonal data that prescribes (i) allowable vapor pressures on two or more prescribed dates or ranges of dates, or (ii) whether butane blending is allowed on two or more prescribed dates or ranges of dates; and (f) one or more information processing units (IPUs) in informational communication with said upstream vapor pressure sensors and said informational databases, logically programmed to retrieve the date and to calculate a calculated blend ratio and calculated blend rate based upon the stored seasonal data and the vapor pressure and volumetric flow rate of said gasoline stream, and for communicating said calculated blend ratio and calculated blend rate to said blending unit; wherein said blending unit periodically accesses a revised calculated blend ratio from said IPU, and adjusts the actual blend ratio to coincide with said revised calculated blend ratio. Of course, if blending is permitted, the method will may further include vapor pressure monitoring both upstream and downstream of the blending operation for validation of the blending operation.

In a further example, which is again applicable to consolidated gasoline streams that carry multiple batches of varying types of gasoline, the batches are associated with batch codes that encode the type of petroleum in the batch. In this example an IPU is logically programmed to dictate a zero blend rate or blend ratio when a batch for which butane blending is impermissible passes the blending unit, such as transmix, diesel or jet fuel. The IPU will determine the type of gasoline passing the blending unit from the batch code, and will typically determine the start and end times for the batch passing the blending unit from a second IPU that is under the control of the pipeline operator. Therefore, in yet another example the description discloses a method for in-line blending of gasoline and butane comprising: (a) providing a continuously flowing gasoline stream that comprises: (i) a plurality of batches of different types of gasoline; (ii) a gasoline flow rate that varies over time; and (iii) a plurality of gasoline vapor pressures; (b) accessing a batch code for a batch of gasoline, wherein said batch code encodes the type of gasoline in said batch; (c) accessing an informational database on which is stored gasoline types for which blending is not permitted; (d) determining whether blending is permitted based upon said gasoline type encoded by said batch code; (e) if blending is permitted, blending said butane stream and said gasoline stream at a blending unit to provide a blended gasoline stream, and (f) if blending is not permitted based on an impermissible gasoline type, ceasing blending until the impermissible gasoline type has passed the blending unit. Of course, if blending is permitted, the method will further include blending based upon the vapor pressure calculations that form the heart of the invention, and preferably vapor pressure monitoring both upstream and downstream of the blending operation.

As further example, which can be practiced at any point along a petroleum pipeline, the description discloses systems and methods for concurrently measuring the vapor pressure of a gasoline stream and the sulfur content of a butane supply stream. For convenience to the butane blender and pipeline operator, this combined monitoring is typically practiced on a skid, with all the necessary sampling and monitoring equipment maintained in one physical location. The description thus also discloses a method for in-line blending of gasoline and butane comprising: (a) providing a gasoline stream that comprises a gasoline vapor pressure and a flow rate; (b) providing a butane stream that comprises a butane vapor pressure; (c) providing an allowable vapor pressure; (d) periodically determining said gasoline vapor pressure; (e) calculating a blend ratio based upon said gasoline vapor pressure, said butane vapor pressure, and said allowable vapor pressure; (f) blending said butane stream and said gasoline stream at said blend ratio to provide a blended gasoline stream having a blended vapor pressure less than or equal to said allowable gasoline vapor pressure; (g) withdrawing butane from said butane stream; and (h) measuring sulfur content of said butane withdrawn from said butane stream. The vapor pressure of the gasoline stream is preferably measured both upstream and downstream of the blending unit.

Put another way, the description discloses a system for in-line blending, of gasoline and butane comprising (a) a gasoline stream; (b) a butane stream; (c) a gasoline vapor pressure sensor, in sensory communication with said gasoline stream; (d) a butane sampling unit for periodically or continuously withdrawing butane from said butane stream; and (e) a blending unit for blending said gasoline stream and said butane stream at a blend ratio into a blended gasoline stream, downstream of said gasoline vapor pressure sensor and said butane sampling unit; wherein said butane sampling unit and said gasoline vapor pressure sensor are located on a platform in proximity to said petroleum pipeline. The sulfur content of the butane may be measured on-line, and the butane returned to the butane stream, or physically removed from the system for sulfur testing in a separate laboratory. The butane is preferably sampled at least once every 1862705.9 litres (500,000 gallons)for sulfur content, although the sample preferably includes more than 10, 50, or even 100 evenly spaced snippets of butane withdrawn from the butane stream.

A further example relates to systems and methods for concurrently measuring vapor pressure and distillation temperatures for a gasoline stream. This example is also typically practiced on a skid, with all the necessary sampling and monitoring equipment maintained in one physical location. In this example the description discloses a method for in-line blending of gasoline and butane comprising: (a) providing a BOB gasoline stream that comprises a gasoline vapor pressure, a $T_D$ and a flow rate; (b) providing a butane stream that comprises a butane vapor pressure; (c) providing an allowable vapor pressure and an allowable $T_D$; (d) periodically determining said gasoline vapor pressure and said gasoline $T_D$; (e) calculating a blend ratio based upon said gasoline vapor pressure, said gasoline $T_D$ said butane vapor pressure, said allowable vapor pressure and said allowable $T_D$; and (e) blending said butane stream and said BOB gasoline stream at said blend ratio to provide a blended BOB gasoline stream having a blended vapor pressure less than or equal to said allowable gasoline vapor pressure, and a $T_D$ greater than or equal to said allowable $T_D$.

Put another way, the description discloses a system for in-line blending of gasoline and butane comprising (a) a gasoline stream; (b) a butane stream; (c) a gasoline vapor pressure and $T_D$ sensor, in sensory communication with said gasoline stream; (d) a distillation unit, in sensory communication with said gasoline stream; and (e) a blending unit for blending said gasoline stream and said butane stream at a blend ratio into a blended gasoline stream, downstream of said gasoline vapor pressure sensor and said distillation unit; wherein said distillation unit and said gasoline vapor pressure sensor are located on a platform in proximity to said petroleum pipeline. The gasoline stream is typically measured on-line, and the gasoline returned to the gasoline stream. In addition, in one example, $T_D$ and vapor pressure can be measured both upstream and downstream of the blending operation. Vapor pressure can be measured by Reid vapor pressure, vapor/liquid ratio, or both, although it will be understood that when a distillation temperature is also measured, one of the vapor/liquid ratio and/or RVP measure need not be taken, and that the vapor/liquid ratio or RVP can instead be calculated based upon at least two distillation temperatures (i.e. T(10) and T(50)), in combination with the vapor/liquid ratio or the RVP.

In a further example, the description discloses a method for in-line blending of gasoline and butane comprising (a) providing a gasoline stream that comprises one or more batches of reformulated gasoline; (b) providing a butane stream; (c) measuring vapor pressure of a reformulated gasoline batch in said gasoline stream; (d) calculating a blend ratio based upon said vapor pressure; (e) blending the butane stream and reformulated gasoline batch stream at said blend ratio to provide a blended gasoline stream; and (f) measuring vapor pressure of the blended gasoline stream.

In one embodiment, which applies to consolidated gasoline streams that transmit multiple batches of differing types of gasoline, the invention provides, a method of recording the quantity of butane blended with a batch of gasoline in a continuous in-line butane blending operation comprising (a) providing a continuously flowing gasoline stream that comprises: (i) a plurality of batches of different gasoline types; (ii) a gasoline flow rate that varies over time; and (iii) a plurality of gasoline vapor pressures comprising (a) providing a gasoline stream; (b) providing a butane stream; (c) determining a start time when a batch of gasoline begins to pass through said in-line butane blending operation; (d) determining an end time at which the batch finishes passing through said in-line butane blending operation; (e) recording the quantity of butane blended with said gasoline stream between said start time and end time; and (f) associating said quantity of butane with said batch in an informational database.

In a further embodiment, which is applicable to butane blending at any point along a pipeline, the invention provides a method for off-site monitoring and collection of data at a gasoline and butane blending operation comprising (a) providing a gasoline stream; (b) providing a butane stream; (c) measuring vapor pressure of gasoline in the gasoline stream; (d) calculating a blend ratio based upon said vapor pressure; (e) blending said butane stream and said gasoline stream at said blend ratio to provide a blended gasoline stream; (f) recording values that represent one or more of (i) vapor pressure and/or $T_D$ of gasoline upstream of the blending unit at particular times; (ii) vapor pressure and/or $T_D$ of gasoline downstream of the blending unit at particular times; (iii) settings for daily calibration of the gasoline vapor pressure sensor(s); (iv) the date(s) of blending covered by the dataset; (v) batch start and end times; (vi) the quantity of butane blended into a gasoline batch (i.e. the quantity of gasoline created in the batch); (vii) the type of gasoline in a batch; (viii) batch destination; (ix) butane quantity stored in any butane storage units, given by date and time; (x) vapor pressure of butane at prescribed sampling times; (xi) sulfur content of butane blended into the gasoline; (xii) metered volumes of butane withdrawn from any butane storage units for defined periods of time; (xiii) volumes of butane blended into the gasoline stream, calculated from butane blend rates, for defined periods of time; (xiv) the pressure of butane at two or more points between the butane storage unit and the butane blending unit; and (xv) the temperature of any butane storage tank that supply butane to the blending unit; (g) storing said values in an informational database; and (h) providing remote access to said values to an information processing unit with optional access to an Internet connection.

It will be understood that elements from any of the foregoing examples can be combined to further describe or characterize any of the other examples. It will also be understood that numerous examples exist to further characterize the invention. The examples below are exemplary, and can be used to further characterize any one of the foregoing eight principal examples unless specifically stated to the contrary. It will be understood that each of these examples may be used individually, or in combination with any number of other examples, to further characterize the methods and systems described in this document.

It will be understood that vapor pressure (either Reid vapor pressure, vapor/liquid ratio or both), is measured downstream of the butane blending operation, to validate that the allowable vapor pressure is not exceeded by the blended gasoline. When downstream vapor pressure is monitored, the systems will further comprise a downstream gasoline vapor pressure sensor in sensory communication with the gasoline stream, and an IPU will be in informational communication with the downstream vapor pressure sensor, for receiving, storing and reporting vapor pressure measurements from the downstream vapor pressure sensor, preferably associated with a batch or batch code.

Measuring the gasoline stream for vapor pressure can be accomplished in-line by drawing a sample of gasoline from the gasoline stream, measuring the vapor pressure of the sample of gasoline in an automated unit such as the Grabner unit, and returning the sample of gasoline to the gasoline stream. This sampling/measurement sequence will typically occur intermittently due to limitations on the monitoring equipment, but is typically executed at least once every 10 or 15 minutes, preferably about every seven minutes.

The foregoing examples can also make further use of product specification information encoded in a batch code. For example, in many operations the allowable vapor pressure will be encoded into the batch code and, if on-line testing reveals that the gasoline does not meet the allowable vapor pressure, the unit will blend butane into the gasoline up to but not exceeding the allowable vapor pressure. In one examples, this method is only practiced during a range of dates when blending is most tightly controlled, such as the summer months. Outside this range of dates, blending may be practiced up to the maximum vapor pressure allowed for the geographic destination of the petroleum, regardless of the vapor pressure specification for the batch encoded by the batch code. In these embodiments, the butane blending IPU or IPUs are preferably programmed with date information during which blending up to the batch code specification is permitted, and a separate range of dates during which blending is permitted to no more than the maximum allowable vapor pressure for the geographic destination of the batch, even if the maximum allowable vapor pressure exceeds the vapor pressure specification from the batch code.

Any of the foregoing examples may also employ a butane sampling unit for periodically or continuously withdrawing butane from the butane stream., The butane sampling unit will typically be under the control of one or more information processing units that cause the butane sampling unit to withdraw into a reservoir at least one sample of butane from the butane supply stream at least every 1892705.9 litres (500,000 gallons) of butane. Snippets can be withdrawn and added to the reservoir at intervals of less than every 1892705.9 litres (500,000 gallons) every 18927.06 litres (5,000 gallons) or even every 1892.7 litres (500 gallons), and consolidated in the reservoir for subsequent testing once no more than 1892705.9 litres (500,000 gallons)of butane have been blended with the system. In one example, butane in the reservoir is manually withdrawn periodically from the butane sampling unit, and butane in the reservoir is tested off-line in a laboratory for sulfur content. Alternatively, the systems and methods may employ an on-line automated sulfur measuring unit in sensory communication with the butane stream that does not require manual withdrawal and laboratory testing of the butane sample, and that returns the butane to the butane stream after the sample is tested. At least one sample would need to be withdrawn and tested every 1892705.9 litres (500,000 gallons) of butane.

The methods and systems of the foregoing examples may also comprise measuring the distillation temperature of the gasoline, preferably both upstream and downstream of the blending operation for validation purposes, preferably using an on-line distillation unit in fluid communication with the gasoline stream. This example is particularly useful when BOB is transmitted through the pipeline. In a corresponding example the description discloses calculating the blend ratio based upon the $T_D$ of the gasoline stream and an allowable $T_D$; and blending the butane stream and the BOB gasoline stream at the blend ratio to provide a blended BOB gasoline stream having a $T_D$ greater than or equal ,to the allowable $T_D$. In one example, the BOB is associated with a batch code that encodes the type of gasoline in the batch, and the distillation unit is only accessed when a batch of BOB is transmitted through the blending unit. The systems can periodically withdraw samples from the gasoline stream that are run through an automated distillation unit and an automated vapor pressure unit before being returned to the gasoline stream..

This distillation testing can also make use of product specification information encoded in a batch code. For example, in many operations the allowable $T_D$ will be encoded into the batch code and, if on-line testing reveals that the gasoline does not meet the allowable $T_D$, the unit will blend butane into the gasoline down to but not below the example allowable $T_D$. In one example, this method is only practiced during a range of dates when blending is most tightly controlled, such as the summer months. Outside this range of dates, blending may be practiced down to the minimum $T_D$ allowed for the geographic destination of the petroleum, regardless of the $T_D$ specification for the batch encoded by the batch code. In these examples, the butane blending IPU or IPUs are preferably programmed with date information during which blending down to the batch code specification is permitted, and a separate range of dates during which blending is permitted to no more than the minimum allowable $T_D$ for the geographic destination of the batch, even if the minimum allowable $T_D$ is less than the $T_D$ specification from the batch code.

The valves that control the flow of butane into the gasoline, under the direction of the IPU at the calculated blend rate and blend ratio, are critical components of the systems. The blending unit preferably employs two valves - (1) an on/off valve located between the gasoline stream and the butane stream, that prevents gasoline from entering the blending unit, and which can be completely shut off when blending is not permitted, and (2) a modulating (a/k/a control) valve that controls the flow of butane towards or from the first valve. The second valve controls the butane flow rate by modulating the size of the flow orifice and the pressure of the butane stream downstream of the valve. The valves may also be under the control of one or more remote information processing units, as described in greater detail elsewhere in this document.

Any of the foregoing methods may also comprise manually shutting down the blending operation in emergencies, during periods of time when blending is not permitted, or if a batch of transmix, diesel or jet fuel enters the blending operation. Manually shutting down the blending operation may be accomplished by actuating the on/off valve near the gasoline stream, and said valve may be controlled from two or more remote locations.

The systems and methods also provide real time information regarding the butane supply used for the blending operation, and IPU access to the butane supply information, optionally through a remote Internet connection. The butane is preferably supplied to the blending unit from one or more butane storage units known as bullets that can contain in excess of 3785.41,37854.12 or even 378541.18 litres (1,000, 10,000 or even 100,000 gallons) of butane. These bullets are typically mounted on the same site as the blending operation, but sufficiently remote from the blending unit that extensive piping is used to transmit the butane either above or below ground. In a preferred embodiment, information about the supply of butane storage and transmission process is continuously taken, stored and used to ensure the integrity and safety of the butane supply and blending operations. For example, pressure sensors will typically be installed on the butane piping at the butane supply and at the blending operation (before and after the butane traverses a facility to the blending operation), so that the pressures can be compared to ensure no leaks in the underground piping. The pressure information derived from these sensors is preferably reconciled and reported in user-friendly format by an IPU. A temperature gauge may also be installed on the butane storage unit, again accessible by the IPU which transmits and displays the temperatures to the operator of the blending operation.

It will be understood that there is some variability in the vapor pressure of commercial supplies of butane. As a result, the vapor pressure of the butane stream should be periodically measured, and the blend ratio and blend rate should be based on the vapor pressure of the butane. The butane vapor pressure may be measured at the same frequency as the gasoline, but is typically measured at a lesser frequency than the gasoline vapor pressure, often on the order of 1, 2, 3 or 4 times per day. In addition, the butane vapor pressure can be measured at the butane storage unit, before the butane travels underground to the blending operation, rather than on the same skid as the blending operation.

The systems and methods of the description also preferably employ one or more information processing units (IPUs) that control the blending process, and that record and report the results of the blending and monitoring processes. The IPUs may thus store or have access to numerous types of information used in the blending process, including:

- Allowable vapor pressures based on the destination of the gasoline and the time of year (typically stored on an IPU controlled by the butane blender);
- Allowable distillation temperatures based on the destination of the gasoline and the time of year (typically stored on an IPU controlled by the butane blender);
- Whether blending is permitted based upon the time of year or the destination of the batch (typically stored on the blender's IPU);
- Whether blending is permitted, based upon the type of gasoline in a batch (typically stored on an IPU controlled by the blender);
- Current date and time information (typically stored and varied on an IPU controlled by the butane blender);

- The flow rate of gasoline passing the blending operation (typically generated as pulses by a flow meter controlled by the pipeline operator, and accessed by the blender's IPU);
- Batch data such as the type of gasoline in the batch, the volume of gasoline in the batch, and/or the destination of the batch (typically provided as information or batch codes stored on an IPU controlled by the pipeline operator, and accessed by (i.e. received or retrieved by) the blender's IPU); and/or
- Start and end times or points for a batch (typically stored on an IPU controlled by the pipeline operator, and accessed by the blender's IPU).

In operation, the blender's IPUs will access the corresponding date, petroleum type, and/or destination of the gasoline stream, and calculate the blend ratio and/or blend rate based upon the allowable vapor pressure for the retrieved seasonal data, date, petroleum type and/or destination for the gasoline stream. Alternatively or in addition; the IPU may access a listing of petroleum products for which blending with butane is impermissible, and dictate a zero blend rate or blend ratio based upon the gasoline type in a particular batch that is passing the blending unit.

In addition, the IPUs control numerous physical operations of the blending process, including the valves, the upstream and downstream vapor pressure monitoring processes, the upstream and downstream distillation temperature monitoring processes, and the butane sampling process. The one or more IPUs are thus logically programmed to execute one or more of the following physical processes:

- Modulate the on/off valve depending on whether blending is permitted;
- Modulate the orifice of the second valve to accomplish the desired blending rate and ratio;
- Withdraw and return gasoline from the petroleum pipeline at a predetermined frequency for vapor pressure and/or $T_D$ measurements; and/or
- Withdraw snippets of butane into a reservoir at a predetermined frequency.

Thus, any of the foregoing examples may further comprise one or more informational processing units in informational communication with said upstream vapor pressure sensors, logically programmed to calculate a calculated blend ratio and calculated blend rate based upon the vapor pressure and volumetric flow rate of said gasoline stream, and for communicating said calculated blend ratio and calculated blend rate to said blending unit; wherein said blending unit periodically accesses said calculated blend ratio and calculated blend rate from said one or more IPUs, and adjusts the actual blend ratio and actual blend rate to coincide with said calculated blend ratio and calculated blend rate. In a preferred examples, the IPU accesses seasonal data that prescribes allowable vapor pressures on two or more prescribed dates or ranges of dates, or whether butane blending is allowed on two or more prescribed dates or ranges of dates, the IPU accesses the current date, and calculates the blend ratio and blend rate based upon the date and the pertinent seasonal data. The gasoline flow rate and gasoline vapor pressure may be periodically re-determined at the same frequency, so that the blend ratio and blend rate are both periodically recalculated to account for differences within and among batches in gasoline flow rate and gasoline vapor pressure.

In any of the foregoing examples, each batch of a petroleum product to flow through the pipeline may have an associated batch code based upon the destination of the batch and/or the type of petroleum product in the batch, and the blending operation may further comprise an information processing unit on which is stored allowable vapor pressures for each batch code. In such examples, the information processing unit may access the batch code associated with the batch flowing through the pipeline, and the information processing unit may calculate the blend ratio and/or blend rate based upon the allowable vapor pressure for the retrieved batch code.

Certain petroleum types cannot be blended with butane, such as transmix, diesel or jet fuel, and when these types pass a blending operation, either the on/off valves must be closed, or the blend rate and ratio set to zero so that the modulating valve is completely shut. In this particular example, the description further discloses: (a) providing one or more impermissible gasoline types for which blending is impermissible, (b) determining the gasoline type for a particular batch, and (c) not blending butane with a batch that comprises an impermissible gasoline type. The opportunity for blending then reemerges after the impermissible gasoline type has passed the blending unit. In one particular embodiment, when the system determines that blending is permitted based on the type of gasoline encoded by the batch code, a quality control check is made using a gravitometer to measure the specific gravity of the petroleum to ensure that the petroleum is of the type with which butane blending is permitted. Alternatively, the valves of the pipeline operator can be evaluated to confirm that the destination of the batch at the tankfarm matches the gasoline type encoded by the batch code.

In an alternative examples, the system does not automatically detect the arrival of a batch with which butane can be blended, because the pipeline operator does not maintain or utilize sophisticated systems such as batch coding. In this embodiment, the system works exactly the same, except that it is necessary to manually enable the system whenever a gasoline type arrives with which butane can be blended.

The determination of gasoline type is preferably made by an information processing unit associated with the blending operation that calculates the blend rate or ratio and controls the blending operation. The first IPU preferably accesses a second IPU maintained by the pipeline operator, determines the type of gasoline transmitted in a particular batch, determines when the batch will start and finish passing by the blending unit, and causes the system to cease blending between said start and finish times.

After performing various blending and monitoring functions, the blender's IPU will typically generate and consolidate data that describes the results of the blending process, correlates blending data with batch information supplied by the pipeline operator, and validates the integrity and safety of the entire blending process, including:

- Vapor pressure and/or $T_D$ of gasoline upstream of the blending unit at particular times;
- Vapor pressure and/or $T_D$ of gasoline downstream of the blending unit at particular times;
- settings for daily calibration of the gasoline vapor pressure sensor(s);
- The date(s) of blending covered by the dataset;
- Batch start and end times;
- The quantity of butane blended into a gasoline batch (i.e. the quantity of gasoline created in the batch);
- The type of gasoline in a batch;
- Batch destination;
- Butane quantity stored in any butane storage units, given by date and time;
- Vapor pressure of butane at prescribed sampling times;
- Sulfur content of butane blended into the gasoline;
- Metered volumes of butane withdrawn from any butane storage units for defined periods of time;
- Volumes of butane blended into the gasoline stream, calculated from butane blend rates, for defined periods of time;
- The pressure of butane at two or more points between the butane storage unit and the butane blending unit; and
- The temperature of any butane storage tank that supply butane to the blending unit.

This information can be retrieved, stored and generated in report formats as required by the butane blender or pipeline operator. In addition, all of this data is preferably accessible at a remote location through a suitably programmed information processing unit.

It has proven especially useful to coordinate batch delivery times with butane consumption data because, by knowing the time at which a batch began passing, and stopped passing a blending point, one can calculate precisely how much butane was blended with any given batch of petroleum flowing through the petroleum pipeline. Therefore, in one particular embodiment the invention provides a method of recording the quantity of butane blended with a batch of petroleum in a continuous in-line butane blending operation comprising (a) providing a gasoline stream; (b) providing a butane stream; (c) recording the start time when a batch of gasoline begins to pass through said in-line butane blending operation; (d) recording the end time at which the batch finishes passing through said in-line butane blending operation; (e) recording the quantity of butane blended with said gasoline stream between said start time and end time; and (f) associating said quantity of butane with said batch in an informational database.

Any of the foregoing data may be stored in a database accessible to a remote location through a dedicated or Internet connection. In a preferred embodiment, gasoline creation data (i.e. butane consumption data) will preferably be accessed by an IPU controlled by the pipeline operator, which will update the volume of any batch passing through the pipeline based on the butane addition.

Any of the foregoing methods may also further comprise or exclude measuring vapor pressure for one or more batches of blended gasoline in a laboratory off-line from the pipeline and blending operation. In a preferred method, this validation is semi-automated, with one or more samples of blended gasoline from each batch to be sampled being automatically withdrawn and stored in a reservoir for collection and eventual off-line analysis. The validation may be done using the chill method.

The sampling, monitoring and blending functions of the blending operation are preferably located in close proximity to one another, and are typically housed on a discreet, permanently mounted skid or platform. Thus, the butane sampling unit, distillation unit, vapor pressure monitor, and IPU will preferably be located all in the same location.

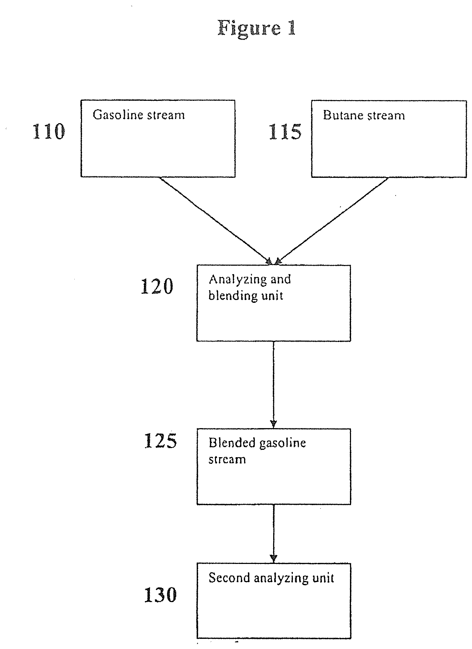

Referring to FIG.1, this illustrates an overview of a preferred example of components of the foregoing embodiments. It shows a gasoline stream 110 and a butane stream 115 entering an analyzing and blending unit 120, and a blended gasoline stream 125 exiting the analyzing and blending unit 120 and entering a second analyzing unit 130. The analyzing and blending unit 120 may comprise a blending unit, a sulfur measuring unit in sensory communication with said butane stream 115 and a gasoline vapor pressure sensor and/or vapor to liquid ratio sensor in sensory communication with said gasoline stream 110. The second analyzing unit 130 may comprise a vapor pressure sensor and/or vapor to liquid ratio sensor in sensory communication with said blended gasoline stream 125.

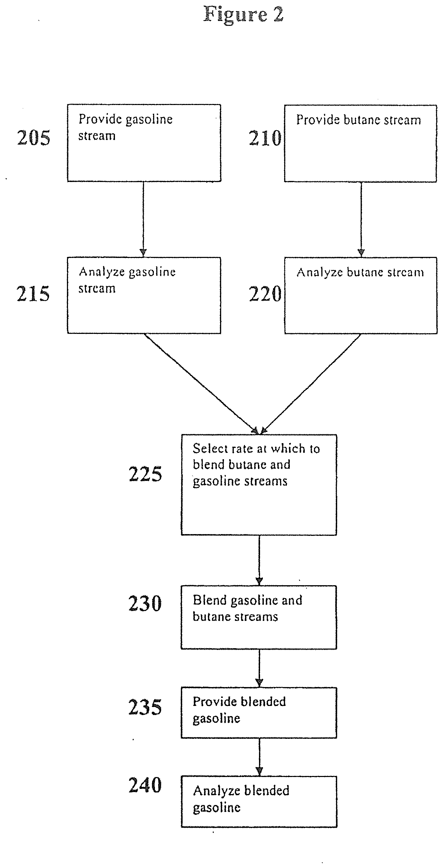

Referring to FIG. 2, this flow chart diagram illustrates an exemplary overview of the blending process: of any of the foregoing methods. The blending process may comprise providing a gasoline stream 205, providing a butane stream 210, analyzing the gasoline stream 215, analyzing the butane stream 220, selecting a rate at which to blend the streams 225, blending the streams 230, providing blended gasoline 235, and analyzing the blended gasoline 240.

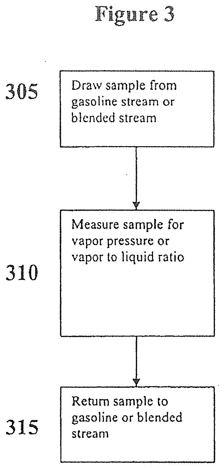

FIG. 3 illustrates an exemplary procedure for measuring the vapor pressure and/or vapor to liquid ratio in the gasoline stream or blended gasoline stream. The procedure comprises drawing a sample from the gasoline or blended stream 305, measuring the vapor pressure and/or vapor to liquid ratio of the sample 310, and returning the sample to the gasoline or blended stream 315.

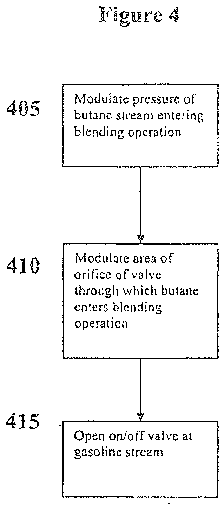

FIG. 4 illustrates an exemplary process for blending butane and gasoline at a given blend ratio. The process comprises modulating the pressure of the butane stream entering the blending operation 405, modulating the size of the orifice through which butane enters the blending operation 410, and opening an on/off valve along the gasoline stream 415.

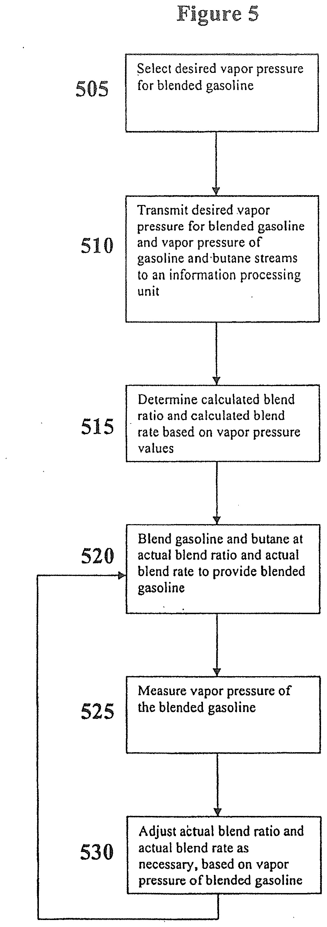

The illustration in FIG. 5 shows an exemplary process for determining the blend ratio of butane and gasoline in any of the foregoing methods. The process comprises selecting a desired vapor pressure for the blended gasoline 505, transmitting values for the desired vapor pressure, along with the vapor pressure of the gasoline and butane being blended, to an information processing unit 510, and calculating the blend ratio based on those values 515. The process shown in FIG. 5 further comprises blending gasoline and butane at the blend ratio to provide blended gasoline 520, measuring the vapor pressure of the blended gasoline 525, and adjusting the blend ratio as necessary based on the vapor pressure of the blended gasoline and the desired vapor, pressure 530.

Throughout this application, various publications are referenced., The disclosures of these publications in their entireties more fully describe the state of the art to which this invention pertains. It will be apparent to those skilled in the art that various modifications and variations can be made in the present invention without departing from the scope of the invention. Other embodiments of the invention will be apparent to those skilled in the art from consideration of the specification and practice of the invention disclosed herein. It is intended that the specification and examples be considered as exemplary only, with a true scope of the invention being indicated by the following claims.

**Claims**

1. A method for in-line blending of gasoline and butane comprising:

   a) providing a continuously flowing gasoline stream that comprises:

   i) a plurality of batches of different gasoline types;
   ii) a gasoline flow rate that varies over time; and
   iii) a plurality of gasoline vapor pressures;

   b) providing an allowable vapor pressure;

   c) providing a butane stream that comprises a butane vapor pressure;
   d) periodically determining said gasoline vapor pressure;
   e) periodically determining said gasoline flow rate;
   f) calculating a blend ratio based upon said butane vapor pressure, said gasoline vapor pressure, and said allowable vapor pressure; and
   g) blending said butane stream and said gasoline stream at a blending unit at said blend ratio to provide a blended gasoline stream having a blended vapor pressure less than or equal to said allowable vapor pressure, and

   wherein the vapor pressure of the gasoline is determined downstream of the blending unit.

2. The method of claim 1, further comprising recording a quantity of butane blended with a batch of gasoline in the continuously flowing gasoline stream by:

   a) determining a start time when a batch of gasoline begins to pass through said in-line butane blending operation;
   b) determining an end time at which the batch finishes passing through said in-line butane blending operation;
   c) recording the quantity of butane blended with said gasoline stream between said start time and end time; and
   d) associating said quantity of butane with said batch in an informational database.

3. The method of claim 1 or 2 further comprising off-site monitoring and collection of data by

   a) recording values that represent one or more of (i) vapor pressure and/or distillation temperature ($T_D$) of gasoline upstream of the blending unit at particular times; (ii) vapor pressure and/or distillation temperature ($T_D$) of gasoline downstream of the blending unit at particular times; (iii) settings for daily calibration of the gasoline vapor pressure sensor(s); (iv) the date(s) of blending covered by the dataset; (v) batch start and end times; (vi) the quantity of butane blended into a gasoline batch (i.e. the quantity of gasoline created in the batch); (vii) the type of gasoline in a batch; (viii) batch destination; (ix) butane quantity stored in any butane storage units, given by date and time; (x) vapor pressure of butane at prescribed sampling times; (xi) sulfur content of butane blended into the gasoline; (xii) metered volumes of butane withdrawn from any butane storage units for defined periods of time; (xiii) volumes of butane blended into the gasoline stream, calculated from butane blend rates, for defined periods of time; (xiv) the pressure of butane at two or more points between the butane storage unit and the butane blending unit; and (xv) the temperature of any butane storage tank that supply butane to the blending unit;

b) storing said values in an informational database; and

c) providing remote access to said values to an information processing unit with optional access to an Internet connection.

**Patentansprüche**

1. Verfahren zum In-line-Mischen von Benzin und Butan, umfassend:

   a) Bereitstellen eines kontinuierlich fließenden Benzinstroms, der

   i) eine Vielzahl von Chargen verschiedener Benzinsorten;
   ii) eine Benzinflussrate, die sich mit der Zeit ändert; und
   iii) eine Vielzahl von Benzindampfdrücken aufweist;

   b) Bereitstellen eines zulässigen Dampfdrucks;
   c) Bereitstellen eines Butanstroms, der einen Butandampfdruck aufweist;
   d) periodisches Bestimmen des Benzindampfdrucks;
   e) periodisches Bestimmen der Benzinflussrate;
   f) Berechnen eines Mischungsverhältnisses basierend auf dem Butandampfdruck, dem Benzindampfdruck und dem zulässigen Dampfdruck; und
   g) Mischen des Butanstroms und des Benzinstroms in einer Mischeinheit in dem Mischungsverhältnis, um einen gemischten Benzinstrom mit einem Gemischdampfdruck, der kleiner oder gleich dem zulässigen Dampfdruck ist, bereitzustellen, und

   wobei der Dampfdruck des Benzins stromabwärts der Mischeinheit bestimmt wird.

2. Verfahren nach Anspruch 1, weiterhin umfassend das Aufzeichnen einer Butanmenge, die mit einer Benzincharge in dem kontinuierlich fließenden Benzinstrom gemischt ist, durch:

   a) Bestimmen einer Startzeit, zu der eine Benzincharge den In-line-Butanmischvorgang zu durchlaufen beginnt;
   b) Bestimmen einer Endzeit, zu der die Charge den In-line-Butanmischvorgang durchlaufen hat;

   c) Aufzeichnen der mit dem Benzinstrom gemischten Butanmenge zwischen der Startzeit und der Endzeit; und
   d) Verknüpfen der Butanmenge mit der Charge in einer Informationsdatenbank.

3. Verfahren nach Anspruch 1 oder 2, ferner umfassend die externe Überwachung und Sammlung von Daten durch

   a) Aufzeichnen von Werten, die einen oder mehrere darstellen von (i) Dampfdruck und/oder Destillationstemperatur ($T_D$) von Benzin vor der Mischeinheit zu bestimmten Zeitpunkten; (ii) Dampfdruck und/oder Destillationstemperatur ($T_D$) von Benzin nach der Mischeinheit zu bestimmten Zeitpunkten; (iii) Einstellungen für die tägliche Kalibrierung des/der Benzindampfdrucksensoren; (iv) Datum/Daten der Mischung, das/die durch den Datensatz abgedeckt ist/sind; (v) Start- und Endzeiten der Charge; (vi) die in eine Benzincharge eingemischte Butanmenge (d. h. die in der Charge erzeugte Benzinmenge); (vii) der Benzinsorte in einer Charge; (viii) Chargenziel; (ix) Butanmenge, die in irgendwelchen Butanspeichereinheiten gespeichert ist, angegeben durch Datum und Zeit; (x) Dampfdruck von Butan zu vorgeschriebenen Probenahmezeiten; (xi) Schwefelgehalt von in das Benzin eingemischtem Butan; (xii) dosierte Volumina Butan, die für bestimmte Zeitspannen aus irgendwelchen Butanspeichereinheiten abgezogen wurden; (xiii) Volumina Butan, die für bestimmte Zeitspannen in den Benzinstrom eingemischt wurden, berechnet aus Butan-Mischungsverhältnissen; (xiv) dem Druck von Butan an zwei oder mehr Punkten zwischen der Butanspeichereinheit und der Butanmischeinheit; und (xv) der Temperatur eines beliebigen Butanspeichertanks, der Butan zu der Mischeinheit liefert;
   b) Speichern der Werte in einer Informationsdatenbank; und
   c) Bereitstellen eines Fernzugriffs auf die Werte durch eine Informationsverarbeitungseinheit, gegebenenfalls mit Zugriff auf eine Internetverbindung.

**Revendications**

1. Procédé pour le mélange en ligne d'essence et de butane comprenant :

   a) le fait de fournir un flux d'essence circulant en continu qui comprend :

   i) une pluralité de lots de différents types d'essence ;

ii) un débit d'essence qui varie avec le temps ; et

iii) une pluralité de pressions de vapeur d'essence ;

b) le fait de fournir une pression de vapeur admissible ;

c) le fait de fournir un flux de butane qui comprend une pression de vapeur de butane ;

d) le fait de déterminer périodiquement ladite pression de vapeur d'essence ;

e) le fait de déterminer périodiquement ledit débit d'essence ;

f) le fait de calculer un rapport de mélange sur la base de ladite pression de vapeur de butane, de ladite pression de vapeur d'essence, et de ladite pression de vapeur admissible ; et

g) le fait de mélanger ledit flux de butane et ledit flux d'essence au niveau d'une unité de mélange audit rapport de mélange pour fournir un flux d'essence de mélange présentant une pression de vapeur de mélange inférieure ou égale à ladite pression de vapeur admissible, et

où la pression de vapeur de l'essence est déterminée en aval de l'unité de mélange.

2. Procédé selon la revendication 1, comprenant en outre le fait d'enregistrer une quantité de butane mélangée avec un lot d'essence dans le flux d'essence circulant en continu en :

a) déterminant un instant de début au moment où un lot d'essence commence à passer par ladite opération de mélange de butane en ligne ;

b) déterminant un instant de fin auquel le lot arrête de passer par ladite opération de mélange de butane en ligne ;

c) enregistrant la quantité de butane mélangée avec ledit flux d'essence entre ledit instant de début et ledit instant de fin ; et en

d) associant ladite quantité de butane audit lot dans une base de données informationnelles.

3. Procédé selon la revendication 1 ou 2, comprenant en outre le fait de surveiller et de recueillir des données à distance du site en :

a) enregistrant des valeurs qui représentent un ou plusieurs éléments parmi (i) la pression de vapeur et/ou la température de distillation ($T_D$) d'essence en amont de l'unité de mélange à des instants particuliers ; (ii) la pression de vapeur et/ou la température de distillation ($T_D$) d'essence en aval de l'unité de mélange à des instants particuliers ; (iii) les paramètres pour l'étalonnage quotidien du ou des capteurs de pression de vapeur d'essence ; (iv) la ou les dates de mélange couvertes par l'ensemble de données ; (v) les instants de début et de fin de lot ; (vi) la quantité de butane mélangée dans un lot d'essence (c'est-à-dire la quantité d'essence créée dans le lot) ; (vii) le type d'essence dans un lot ; (viii) la destination de lot ; (ix) la quantité de butane stockée dans toutes les unités de stockage de butane, donnée par date et heure ; (x) la pression de vapeur de butane à des instants de prélèvement prescrits ; (xi) la teneur en soufre du butane mélangé dans l'essence ; (xii) les volumes mesurés de butane prélevé dans toutes les unités de stockage de butane sur des intervalles de temps définis ; (xiii) les volumes de butane mélangés dans le flux d'essence, calculés à partir des taux de mélange de butane, sur des intervalles de temps définis ; (xiv) la pression de butane en deux points ou plus entre l'unité de stockage de butane et l'unité de mélange de butane ; et (xv) la température de tout réservoir de stockage de butane qui alimente en butane l'unité de mélange ;

b) mémorisant lesdites valeurs dans une base de données informationnelles ; et en

c) fournissant un accès à distance auxdites valeurs à une unité de traitement d'informations avec un accès optionnel à une connexion Internet.

Figure 1

```
        ┌─────────────────┐        ┌─────────────────┐
  110   │ Gasoline stream │   115  │  Butane stream  │
        │                 │        │                 │
        └─────────────────┘        └─────────────────┘
                  \                      /
                   \                    /
                    \                  /
                     ┌───────────────────┐
              120    │  Analyzing and    │
                     │  blending unit    │
                     │                   │
                     └───────────────────┘
                              │
                              ▼
                     ┌───────────────────┐
              125    │ Blended gasoline  │
                     │ stream            │
                     │                   │
                     └───────────────────┘
                              │
                              ▼
                     ┌───────────────────┐
                     │ Second analyzing unit │
              130    │                   │
                     │                   │
                     └───────────────────┘
```

## Figure 2

```
      ┌─────────────────┐        ┌─────────────────┐
205   │ Provide gasoline│   210  │ Provide butane  │
      │ stream          │        │ stream          │
      └────────┬────────┘        └────────┬────────┘
               │                          │
               ▼                          ▼
      ┌─────────────────┐        ┌─────────────────┐
215   │ Analyze gasoline│   220  │ Analyze butane  │
      │ stream          │        │ stream          │
      └────────┬────────┘        └────────┬────────┘
                \                        /
                 \                      /
                  ▼                    ▼
                ┌────────────────────────┐
                │ Select rate at which to│
          225   │ blend butane and       │
                │ gasoline streams       │
                └───────────┬────────────┘
                            │
                            ▼
                ┌────────────────────────┐
          230   │ Blend gasoline and     │
                │ butane streams         │
                └───────────┬────────────┘
                            │
                            ▼
                ┌────────────────────────┐
          235   │ Provide blended        │
                │ gasoline               │
                └───────────┬────────────┘
                            │
                            ▼
                ┌────────────────────────┐
          240   │ Analyze blended        │
                │ gasoline               │
                └────────────────────────┘
```

## Figure 3

305 — Draw sample from gasoline stream or blended stream

310 — Measure sample for vapor pressure or vapor to liquid ratio

315 — Return sample to gasoline or blended stream

Figure 4

405 | Modulate pressure of butane stream entering blending operation

410 | Modulate area of orifice of valve through which butane enters blending operation

415 | Open on/off valve at gasoline stream

## Figure 5

505 — Select desired vapor pressure for blended gasoline

510 — Transmit desired vapor pressure for blended gasoline and vapor pressure of gasoline and butane streams to an information processing unit

515 — Determine calculated blend ratio and calculated blend rate based on vapor pressure values

520 — Blend gasoline and butane at actual blend ratio and actual blend rate to provide blended gasoline

525 — Measure vapor pressure of the blended gasoline

530 — Adjust actual blend ratio and actual blend rate as necessary, based on vapor pressure of blended gasoline

**EP 3 301 533 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3751644 A, Mayer
- US 3999959 A, Bajek's
- US 6679302 B